# EUROPEAN PATENT APPLICATION

(11) **EP 4 782 786 A1**
(43) Date of publication of application: **29.07.2026**
(21) Application number: 26153420.0
(22) Date of filing: 22.01.2026
(51) Int. Cl.: G01B 11/24

(54) **SYSTEM AND METHOD FOR INSPECTING CURVATURE OF CASE CORNER OF SECONDARY BATTERY**

(30) Priority: 24.01.2025 KR 20250011755
(71) Applicant: SAMSUNG SDI CO., LTD., Yongin-si, Gyeonggi-do 17084 (KR)
(72) Inventor: Kim, Joonkil, 17084 Yongin-si, Gyeonggi-do (KR); Hwang, Sunuk, 17084 Yongin-si, Gyeonggi-do (KR)
(74) Representative: Meissner Bolte Partnerschaft mbB

(57) **Abstract**

A system for inspecting curvature of a case corner (82) of a secondary battery, the system including a light source (100) configured to radiate light to a case corner (82) of a secondary battery at a plurality of incidence angles to generate reflected light, resulting in generated reflected light, a camera (200) configured to capture the generated reflected light to acquire a reflected light image of the case corner (82), and an image analyzer (300) configured to analyze the reflected light image and determine whether a curvature state of the case corner (82) is normal.

## Description

### BACKGROUND

### 1. Field

The present disclosure relates to a system and method for inspecting the curvature of a case corner of a secondary battery.

### 2. Description of the Related Art

Secondary batteries are batteries that can be charged and discharged, unlike primary batteries that cannot be recharged. Low-capacity batteries are used in small portable electronic devices such as smartphones, feature phones, notebook computers, digital cameras, and camcorders, and large-capacity batteries are widely used as power sources for driving motors and power storage batteries in hybrid electric vehicles, electric vehicles, and the like. Such a secondary battery includes an electrode assembly composed of positive and negative electrodes, a case that accommodates the electrode assembly, an electrode terminal connected to the electrode assembly, etc.

In such a secondary battery, the case serves to protect internal battery cells and block the battery cells from an external environment and thus needs to be manufactured with accurate design values, and structural stability and durability are required.

In this regard, it is important to manufacture a prismatic secondary battery case with an open top and corners having curvature of a specific design value.

The above information disclosed in this Background section is for enhancement of understanding of the background of the present disclosure, and therefore, it may contain information that does not constitute a related (or prior) art.

### SUMMARY

The invention includes a system for inspecting curvature of a case corner of a secondary battery, the system including a lighting unit configured to radiate light to a case corner of a secondary battery at a plurality of incidence angles to generate reflected light, resulting in generated reflected light, a camera configured to capture the generated reflected light to acquire a reflected light image of the case corner, and an image analysis unit configured to analyze the reflected light image and determine whether a curvature state of the case corner is normal.

The lighting unit may be configured to set the plurality of incidence angles at regular intervals and radiates light, resulting in set incidence angles.

The lighting unit may be configured to sequentially control the set incidence angles.

The camera may be above the case corner to acquire the reflected light image.

The image analysis unit may be configured to calculate a width of a pixel section having a gray value of 200 or more in the reflected light image to calculate thickness data from the generated reflected light.

The image analysis unit may be configured to calculate an average value of pixels having a gray value of 200 or more in the reflected light image to calculate brightness data from the generated reflected light.

The image analysis unit may be configured to determine whether the curvature state of the case corner is normal based on a minimum/maximum ratio of thickness data of the generated reflected light and a minimum value of brightness data of the generated reflected light.

The invention includes a method of inspecting curvature of a case corner of a secondary battery, the method including radiating light to a case corner of a secondary battery at a plurality of incidence angles, capturing reflected light of the radiated light to acquire a reflected light image of the case corner, processing the reflected light image to calculate thickness data and brightness data of the reflected light, resulting in calculated thickness data and calculated brightness data, and determining whether a curvature state of the case corner is normal based on the calculated thickness data and the calculated brightness data.

Radiating light may include setting, by a lighting unit, incidence angles at regular intervals, resulting in set incidence angles.

The lighting unit may sequentially control the set incidence angles and radiate light at each of the set incidence angles.

Capturing the reflected light image may include using a camera above the case corner.

Processing to calculate the thickness data may include calculating a width of a pixel section having a gray value of 200 or more in the reflected light image.

Calculating the brightness data may include calculating an average value of pixels having a gray value of 200 or more in the reflected light image.

Determining whether the curvature state of the case corner is normal may include determining whether the curvature state of the case corner is normal based on a minimum/maximum ratio of the calculated thickness data and a minimum value of the calculated brightness data.

The invention includes a system for inspecting curvature of a case corner of a secondary battery, the system including a lighting unit configured to radiate light to a case corner of a secondary battery at a plurality of incidence angles to generate reflected light, resulting in generated reflected light, a camera configured to capture the generated reflected light to acquire a plurality of reflected light images, resulting in a plurality of acquired reflected light images, an image analysis unit configured to integrally analyze the plurality of acquired reflected light images, determine whether a curvature state of the case corner is normal, resulting in a determined curvature state of the case and determine an outlier, and an output unit configured to visually display or store the determined curvature state of the case corner.

The lighting unit may be configured to set the plurality of incidence angles at regular intervals to radiate light, and independently control a radiation intensity and an illuminance at each of the plurality of incidence angles.

The camera may be configured to capture the generated reflected light at each of the plurality of incidence angles to sequentially acquire time-synchronized reflected light images, resulting in acquired reflected light images.

The image analysis unit may be configured to calculate thickness data and brightness data from the acquired reflected light images, resulting in calculated thickness data and calculated brightness data, determine an outlier of the determined curvature state of the case corner based on the calculated thickness data and the calculated brightness data, and visually display the outlier.

The image analysis unit may be configured to use a machine learning algorithm and automatically distinguish a normal curvature pattern from an abnormal curvature pattern in the plurality of acquired reflected light images.

The output unit may be configured to visually display whether the curvature state is normal and the outlier in real time, store the determined curvature state of the case corner, and transmit the determined curvature state of the case corner to an external system via a network.

### BRIEF DESCRIPTION OF THE DRAWINGS

Features will become apparent to those of ordinary skill in the art by describing in detail exemplary embodiments with reference to the attached drawings, in which:
FIG. 1A is a top perspective view of an exterior of a prismatic secondary battery;
FIG. 1B is a cross-sectional view along line I-I' in FIG. 1A;
FIG. 2 is an exemplary view illustrating a secondary battery module in which secondary batteries are arranged;
FIG. 3 is an exemplary view of a secondary battery pack formed to apply the secondary battery module illustrated in FIG. 2 to an actual product;
FIG. 4 is a view for describing a vehicle including the secondary battery pack illustrated in FIG. 3;
FIG. 5 is a view illustrating a system for inspecting the curvature of a case corner of a secondary battery according to an embodiment of the present disclosure;
FIG. 6 is a schematic diagram illustrating a curvature inspection concept of a case corner of the secondary battery according to an embodiment of the present disclosure;
FIG. 7 is a view illustrating a method of inspecting the curvature of a case corner of a secondary battery according to an embodiment of another aspect of the present disclosure;
FIG. 8 is a view illustrating a system for inspecting the curvature of a case corner of a secondary battery according to an embodiment of still another aspect of the present disclosure;
FIG. 9 is a view illustrating a process of inspecting the curvature of a case corner of a prismatic secondary battery according to an embodiment of the present disclosure;
FIG. 10A is a view illustrating the result of analyzing reflected light images for a normal sample using the system for inspecting the curvature of a case corner of a secondary battery according to an embodiment of the present disclosure;
FIG. 10B is a view illustrating the result of analyzing reflected light images for a normal sample using the system for inspecting the curvature of a case corner of a secondary battery according to an embodiment of the present disclosure;
FIG. 11 is a comparison graph of thicknesses of reflected light of a normal sample and a defective sample using the system for inspecting the curvature of a case corner of a secondary battery according to an embodiment of the present disclosure;
FIG. 12 is a comparison graph of brightness of reflected light of a normal sample and a defective sample using the system for inspecting the curvature of a case corner of a secondary battery according to an embodiment of the present disclosure;
FIG. 13A is a view illustrating reflected light images for a normal sample using the system for inspecting the curvature of a case corner of a secondary battery according to an embodiment of the present disclosure;
FIG. 13B is a view illustrating profile data generated based on the reflected light image of FIG. 13A;
FIG. 14A is a view illustrating reflected light images for a defective sample using the system for inspecting the curvature of a case corner of a secondary battery according to an embodiment of the present disclosure;
FIG. 14B is a view illustrating profile data generated based on the reflected light image of FIG. 14A; and
FIG. 15 is a view illustrating a data analysis result that distinguishes a normal sample from a defective sample based on thickness and brightness data of reflected light using the system for inspecting the curvature of a case corner of a secondary battery according to an embodiment of the present disclosure.

### DETAILED DESCRIPTION

Example embodiments will now be described more fully hereinafter with reference to the accompanying drawings; however, they may be embodied in different forms and should not be construed as limited to an embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

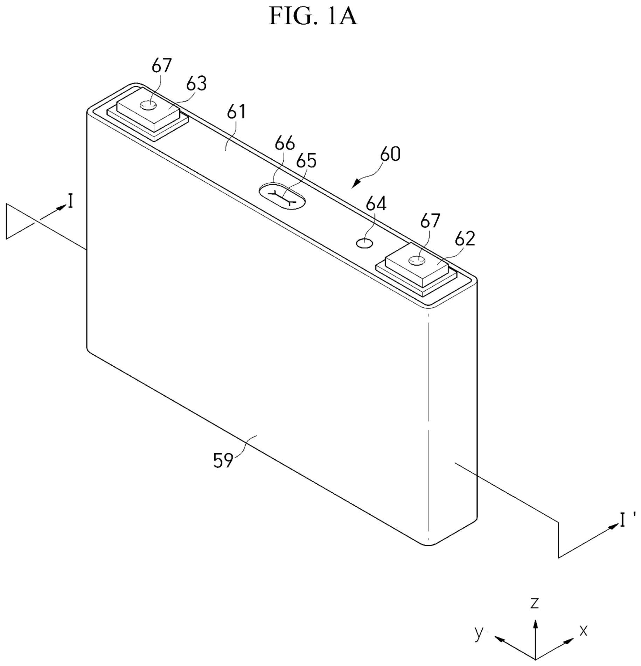

FIG. 1A is a top perspective view of an exterior of a prismatic secondary battery.

A case 59 defines an overall appearance of the prismatic secondary battery, and may be made of a conductive metal, such as aluminum, aluminum alloy, or nickel-plated steel. In addition, the case 59 may provide a space for accommodating an electrode assembly therein.

A cap assembly 60 may include a cap plate 61 that covers the opening of the case 59. In some examples, the case 59 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent 66 formed with a notch 65. The vent 66 is for discharging gas generated inside the secondary battery.

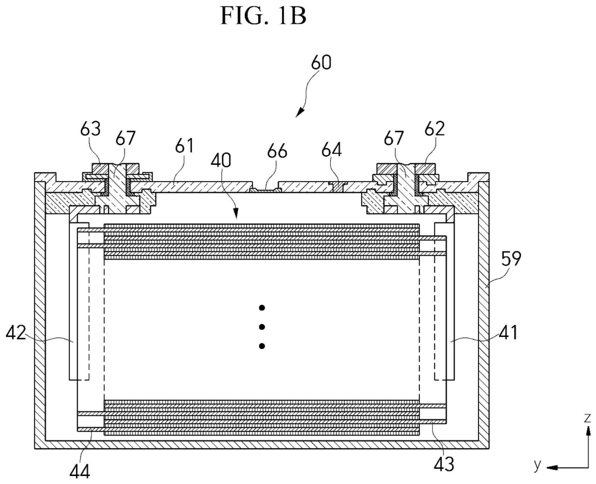

FIG. 1B is a cross-sectional view taken along line I-I' of FIG. 1A, according to some embodiments of the present disclosure.

A prismatic secondary battery may include an electrode assembly 40, a first current collector 41, a first terminal 63, a second current collector 42, a second terminal 62, a case 51, and a cap assembly 60.

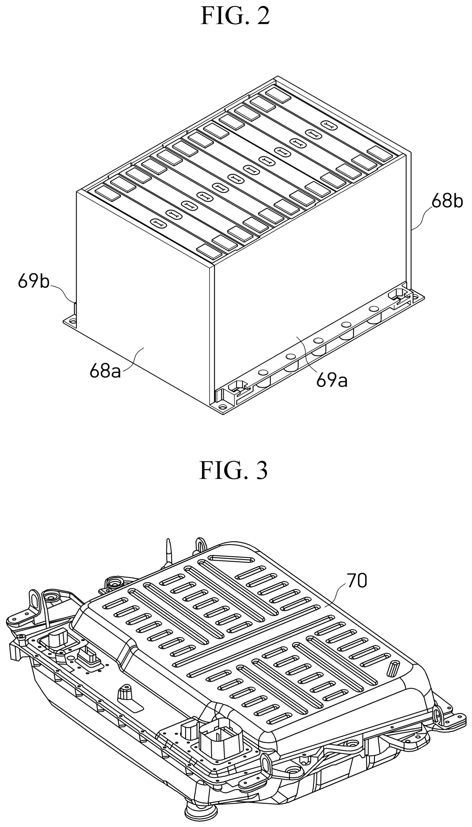

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction (e.g., the Y-axis direction) of the case 51. In some other embodiments, the electrode assembly 40 is a stack type rather than a winding type. The shape of the electrode assembly 40 may vary. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case (see FIG. 2), and the number of electrode assemblies in the case may vary. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy, and the second electrode plate may include a second electrode tab 44 (or a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 59 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied.

The first current collector 41 and the second current collector 42 are connected to the first terminal 63 and the second terminal 62 through connection members 67, respectively. In some embodiments, the connection members 67 may each have an outer peripheral surface that is threaded, and may be fastened to the first terminal 63 and the first terminal 63 by screwing. However, the connection members 67 may also be coupled to the first terminal 63 and the first terminal 63 by riveting or welding.

FIG. 2 is an exemplary view illustrating a secondary battery module in which secondary batteries are arranged. With the high capacity of secondary batteries for driving electric vehicles or the like, a secondary battery module is manufactured by arranging and connecting a plurality of secondary battery cells in a transverse direction and/or a longitudinal direction. The plurality of secondary batteries may be arranged in a space defined by a pair of facing end plates 68a and 68b and a pair of facing side plates 69a and 69b. The arrangement of the secondary battery may be designed to have an arrangement direction and number to obtain the desired voltage and current specifications.

FIG. 3 is a perspective view of a battery pack 70 according to embodiments of the present disclosure. The battery pack 70 may include an assembly to which individual batteries are electrically connected and a pack housing accommodating the same. In the drawings, for convenience of illustration, components including a bus bar, a cooling unit, external terminals for electrically connecting batteries, etc., are omitted.

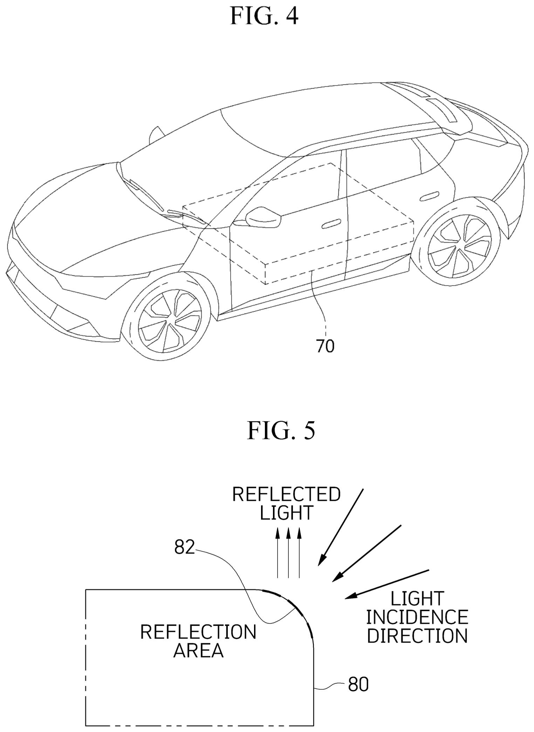

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but the number of wheels may vary. FIG. 4 shows a vehicle that includes the battery pack 70 shown in FIG. 3 on the lower body thereof. The vehicle may operate by (e.g., may be powered by) receiving power from the battery pack 70.

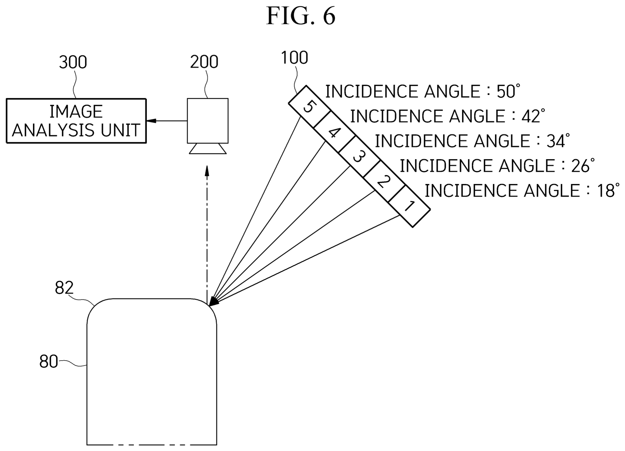

FIG. 5 is a view illustrating a system for inspecting the curvature of a case corner of a secondary battery according to an embodiment of the present disclosure. FIG. 6 is a schematic diagram illustrating a curvature inspection concept of a case corner of the secondary battery according to an embodiment of the present disclosure.

As illustrated, a system for inspecting the curvature of a case corner of a secondary battery according to an embodiment of the present disclosure is a system for inspecting a curvature state of a case corner 82 of the secondary battery and includes a lighting unit 100 (e.g., light source) for radiating light to the case corner 82 at a plurality of incidence angles to generate reflected light, a camera 200 for capturing the generated reflected light to acquire the reflected light image of the case corner 82, and an image analysis unit 300 (e.g., image analyzer) for analyzing the reflected light image to determine whether the curvature state of the case corner 82 is normal.

As illustrated in FIG. 6, the system according to the present disclosure radiates light to the case corner 82 of the secondary battery at the plurality of incidence angles to generate reflected light, captures the reflected light image using the camera 200 to acquire the reflected light image, and then analyzes the acquired reflected light image to determine whether the curvature state of the case corner 82 is normal using the image analysis unit 300. This provides a precise and efficient curvature inspection process in a high-speed, non-contact manner.

The lighting unit 100 according to an embodiment of the present disclosure emits light to the case corner 82 of the secondary battery at the plurality of incidence angles to generate reflected light. The lighting unit 100 may set the plurality of incidence angles at regular intervals and control a radiation angle and radiation intensity.

The lighting unit 100 is formed using light sources, such as light-emitting diodes (LEDs), and each light source may be independently controlled to optimize light radiation conditions for each incidence angle. This enables uniform reflected light data to be generated even in the complex structure of the case corner 82.

The lighting unit 100 according to an embodiment of the present disclosure may set incidence angles at regular intervals and radiate light.

The lighting unit 100 is for radiating light to the case corner 82 of the secondary battery, setting incidence angles at regular intervals and uniformly radiating light, and thus the curvature state of the case corner 82 can be inspected precisely.

The lighting unit 100 may radiate light to generate reflected light and set a plurality of incidence angles at regular intervals. The lighting unit 100 may use LEDs or similar light sources, and each light source may be operated independently through a controller.

For example, since the lighting unit 100 may set incidence angles at regular intervals of 18°, 26°, 34°, 42°, and 50° and radiate light to the case corner 82, reflected light with which all corners are uniformly irradiated may be generated. Each incidence angle may be optimized in consideration of the structure of the case corner 82 and the reflection characteristics of light, and such interval settings can minimize distortion of the reflected light to provide accurate curvature data.

The lighting unit 100 may maintain the uniform radiation intensity of light at each incidence angle through the controller or adjust the radiation intensity as needed.

As a specific example, to inspect corners of a secondary battery case 80, the lighting unit 100 sets the incidence angles at regular intervals of 18°, 26°, 34°, 42°, and 50° and radiates light. The radiated light generates reflected light according to the reflection characteristics of the case corner 82, and the reflected light data at each incidence angle is captured by the camera 200. The lighting unit 100 using an LED light source is individually controlled and maintains the uniform radiation intensity of light at each incidence angle. Accordingly, the lighting unit 100 provides an optical environment in which each case corner 82 may be uniformly irradiated.

Accordingly, since the lighting unit 100 according to an embodiment of the present disclosure may set the incidence angles at regular intervals and radiate light, the curvature state of the case corner 82 can be precisely inspected.

The lighting unit 100 according to an embodiment of the present disclosure may sequentially control the set incidence angle to radiate light. This enables the reflection light data generated at each incidence angle to be individually collected so that the curvature state of the case corner 82 can be precisely analyzed.

The lighting unit 100 may radiate light to the case corner 82 of the secondary battery to generate reflected light and sequentially control the plurality of set incidence angles. The lighting unit 100 may include an LED light source, and each LED may be independently controlled through a controller.

The set incidence angles are arranged, for example, at regular intervals of 18°, 26°, 34°, 42°, and 50°, and the lighting unit 100 sequentially activates these incidence angles to radiate light. The sequential control may allow the reflected light generated at each incidence angle to be individually processed, which may be integrally analyzed (e.g., analyzed altogether).

The lighting unit 100 may adjust the radiation intensity and radiation time at each incidence angle, and such control allows the lighting unit 100 to ensure uniform radiation of light at each incidence angle and at the same time, generate optimized reflected light data according to the reflection characteristics of the case corner 82.

In a specific embodiment, to inspect the corner of the secondary battery case 80, the lighting unit 100 sequentially activates the incidence angles that are set at regular intervals of 18°, 26°, 34°, 42°, and 50° to radiate light. At each incidence angle, the lighting unit 100 independently adjusts the radiation intensity using an LED light source, and the radiated light generates reflected light at the case corner 82. Since the reflected light may be individually captured by the camera 200 and the lighting unit 100 sequentially radiates light at each incidence angle, data can be clearly distinguished without interference between reflected light.

Accordingly, since the lighting unit 100 according to an embodiment of the present disclosure sequentially controls the plurality of set incidence angles to radiate light, the curvature state of the case corner 82 can be precisely analyzed. Since the reflected light generated at each incidence angle is individually collected, it is possible to prevent data confusion and increase the accuracy and reliability of the inspection process.

The camera 200 according to an embodiment of the present disclosure captures the reflected light generated by the lighting unit 100 to acquire the reflected light image of the case corner 82. The camera 200 is vertically disposed above (e.g., directly above or perpendicular to the cap plate 61) the case corner 82 so that the reflected light is accurately condensed without distortion. Through the reflected light images captured at the plurality of incidence angles, the curvature state of the case corner 82 may be analyzed in a three-dimensional manner. The resolution and focus of the camera 200 may be set as a specification for precisely acquiring a reflected light image.

The camera 200 according to an embodiment of the present disclosure may be vertically disposed above the case corner 82 so that the reflected light image may be acquired. Accordingly, since the camera 200 is vertically disposed above the corner to acquire the reflected light image, it is possible to minimize the distortion of the reflected light and accurately analyze the curvature state.

The vertical arrangement enables the reflected light to be accurately incident on an image sensor of the camera 200, thereby preventing the distortion of the reflected light image and enabling precise data collection. The camera 200 may include a high-resolution image sensor and may be configured to capture a specific change in reflected light. In addition, the camera 200 may individually store the reflected light images captured at each incidence angle, thereby increasing the accuracy of image processing during a subsequent data analysis process.

The camera 200 is installed by optimizing a distance and angle from the case corner 82, and the vertical arrangement allows the reflected light to be uniformly incident on the center of the image sensor of the camera 200, which can minimize distortion that may occur when analyzing the thickness and brightness of the reflected light. The arrangement of the camera 200 is adjusted to clearly capture the reflected light generated at each incidence angle in synchronization with the lighting unit 100.

As illustrated in FIGS. 5 and 6, specifically, the camera 200 is vertically disposed above the case corner 82 in order to inspect the corner of the secondary battery case 80. The camera 200 acquires the reflected light image by capturing the reflected light generated at the plurality of incidence angles of 18°, 26°, 34°, 42°, and 50° by the lighting unit 100. The camera 200 captures pixels of which a gray value is 200 or higher in each reflected light image using a high-resolution image sensor and transmits the image data to the image analysis unit 300. The camera 200 may maintain the vertical arrangement and an optimal focal distance, thereby increasing the precision and reliability of the reflected light image.

Accordingly, since the camera 200 according to an embodiment of the present disclosure is vertically disposed above the case corner 82 to acquire the reflected light image, it is possible to minimize the distortion of the reflected light and accurately analyze the curvature state. Such arrangement optimizes synchronization between the camera 200 and the lighting unit 100, thereby increasing the accuracy of data collection and the reliability of the inspection process and greatly improving the precision of the inspection result.

The image analysis unit 300 according to an embodiment of the present disclosure analyzes the reflected light image acquired by the camera 200 and determines whether the curvature state of the case corner 82 is normal. The image analysis unit 300 calculates the thickness and brightness of the reflected light image, calculates the calculated thickness and brightness as data, and distinguishes a normal state from an abnormal state based on the calculated data. The image analysis unit 300 uses a high-performance image processing algorithm to optimize a data processing speed, and the analyzed data is transmitted to an output unit 400 of a subsequent stage.

The image analysis unit 300 according to an embodiment of the present disclosure may calculate a width of a pixel section of which a gray value is 200 or more in the reflected light image and output thickness data of the reflected light.

Since the image analysis unit 300 calculates the width of the pixel section of which a gray value is 200 or more in the reflected light image and outputs the thickness data of the reflected light, the curvature state of the case corner 82 can be precisely analyzed. This enables efficient determination of whether the curvature state is abnormal through accurate data calculation based on pixel values.

The image analysis unit 300, which analyzes the curvature state by processing the reflected light image acquired by the camera 200, identifies the pixel section of which a gray value is 200 or higher in the reflected light image, calculates a width of the corresponding section, and calculates the thickness data of the reflected light. The image analysis unit 300 includes a high-speed image processing algorithm and is configured to accurately determine data on the basis of a pixel.

The image analysis unit 300 analyzes each pixel value of the reflected light image and identifies pixels of which a gray value is 200 or higher as a section. The gray value is a value that quantitatively represents pixel brightness, and a pixel of which a set threshold value is 200 or higher is regarded as a valid reflected light section. The image analysis unit 300 calculates start and end points of the valid reflected light section and uses the points to calculate the width of the section.

The image analysis unit 300 calculates the width of the pixel section and generates the thickness data of the reflected light. The thickness of the reflected light is an important index that represents the curvature state of the case corner 82, whereby the thickness data remains in a predetermined range when the curvature is normal, and a deviation occurs in the thickness data when an abnormality occurs.

As a specific embodiment, the image analysis unit 300 processes the reflected light image acquired by the camera 200 to inspect the case corner 82 of the secondary battery case 80. The image analysis unit 300 identifies the section of which a gray value is 200 or higher among the pixel values of the reflected light image and calculates the width of this section to calculate the thickness data of the reflected light. For example, the thickness data of the reflected light image acquired at the incidence angles of 18°, 26°, 34°, 42°, and 50° remains in the predetermined range in a normal state, and when a curvature abnormality occurs, the thickness data decreases or varies in a specific section. The image analysis unit 300 evaluates the curvature state based on such thickness data, and the calculated data is transmitted to a subsequent processing stage.

Accordingly, since the image analysis unit 300 according to an embodiment of the present disclosure calculates the width of the pixel section of which a gray value is 200 or higher in the reflected light image and calculates the thickness data of the reflected light, the curvature state of the case corner 82 can be precisely analyzed. This enables accurate and consistent analysis based on the reflected light image data, whereby it can be efficiently determined whether the curvature state is abnormal.

The image analysis unit 300 according to an embodiment of the present disclosure may calculate an average value of the pixels of which a gray value is 200 or higher in the reflected light image to calculate brightness data of the reflected light.

Since the image analysis unit 300 calculates the average value of the pixel section of which a gray value is 200 or more in the reflected light image and outputs the thickness data of the reflected light, the curvature state of the case corner 82 can be precisely analyzed. This enables efficient determination of whether the curvature state is abnormal through accurate data calculation based on pixel values.

The image analysis unit 300, which analyzes the reflected light image acquired by the camera 200 and calculates the brightness data of the reflected light, processes the data based on a gray value of each pixel. The image analysis unit 300 identifies only pixels of which a gray value is 200 or more in the reflected light image and calculates the brightness data of the reflected light by averaging the brightness values of these pixels. The brightness data of the reflected light is used as an important index for evaluating the curvature state of the case corner 82 and is used to determine whether the curvature is abnormal.

The image analysis unit 300 analyzes each pixel value of the reflected light image and calculates the average value of only valid pixels of which a gray value is 200 or more. The gray value is a value that quantitatively represents pixel brightness, and the average brightness of valid pixels reflects the uniformity and intensity of reflected light. This removes unnecessary data or noise from the reflected light image and generates accurate data for evaluating the curvature state.

The image analysis unit 300 calculates the average value of the valid pixels to calculate the brightness data of the reflected light. The brightness data remains in the predetermined range in a normal curvature state, and when a curvature abnormality occurs, the brightness value varies. The image analysis unit 300 evaluates the curvature state based on such data and identifies the abnormal state.

As a specific embodiment, the image analysis unit 300 processes the reflected light image acquired by the camera 200 to inspect the corner of the secondary battery case 80. The image analysis unit 300 identifies the section of which a gray value is 200 or more among the pixel values of the reflected light image and calculates the average value of these pixels to calculate the brightness data of the reflected light. For example, in the reflected light images acquired at the incidence angles of 18°, 26°, 34°, 42°, and 50°, the average brightness value of the valid pixels remains in the predetermined range in the normal state, and when a curvature abnormality occurs, the brightness value decreases or varies in a specific section. The image analysis unit 300 evaluates the curvature state based on such thickness data, and the calculated data is transmitted to a subsequent processing stage.

Accordingly, since the image analysis unit 300 according to an embodiment of the present disclosure calculates the average value of the pixels of which a gray value is 200 or more in the reflected light image to calculate the thickness data of the reflected light, the curvature state of the case corner 82 can be precisely analyzed. This enables accurate and consistent analysis based on the reflected light image data, whereby it can be efficiently determined whether the curvature state is abnormal.

The image analysis unit 300 according to an embodiment of the present disclosure may determine whether the curvature state of the case corner 82 is normal based on a minimum/maximum ratio of the thickness data of the reflected light and a minimum value of the brightness data of the reflected light.

Since the image analysis unit 300 determines whether the curvature state of the case corner 82 is normal based on the minimum/maximum ratio of the thickness data of the reflected light and the minimum value of the brightness data of the reflected light, whether the curvature state is abnormal can be determined accurately and reliably.

The image analysis unit 300 analyzes the reflected light image acquired by the camera 200, calculates the thickness data and brightness data of the reflected light, and based on this, determines the curvature state of the case corner 82. The image analysis unit 300 extracts minimum and maximum values from the thickness data of the reflected light, calculates the two values as a ratio, and evaluates the uniformity of the curvature state. In addition, the image analysis unit 300 calculates the minimum value from the brightness data of the reflected light and additionally determines whether the curvature of the case corner 82 is abnormal. Using these data, reflected light information collected at each incidence angle is integrally analyzed, thereby increasing determination accuracy.

The image analysis unit 300 calculates the minimum and maximum values from the thickness data of the reflected light and then calculates the minimum/maximum ratio. This ratio is an index of the uniformity of the curvature state, whereby the ratio remains close to 1 in the normal state, and the ratio varies in the abnormal state. Such an analysis process enables quantitative evaluation of the uniformity of the curvature state.

The image analysis unit 300 extracts the minimum value of the brightness data of the reflected light and uses the extracted minimum value as a specification for distinguishing the normal state from the abnormal state. The brightness data is an important index of the reflection characteristics of the case corner 82, and in the abnormal state, the brightness value decreases to a specific threshold value or less. Such analysis accurately evaluates the curvature state through a change in intensity of the reflected light.

The image analysis unit 300 determines the curvature state based on the minimum/maximum ratio of the thickness data and the minimum value of the brightness data. In the normal state, the ratio of the thickness data and the value of the brightness data are present within the set threshold range, and in the abnormal state, the ratio of the thickness data and the value of the brightness data is outside of this range. The image analysis unit 300 determines whether the curvature state of the case corner 82 is normal based on such an analysis result.

As a specific example, the image analysis unit 300 analyzes the reflected light images acquired at the incidence angles of 18°, 26°, 34°, 42°, and 50°, calculates the minimum and maximum values of the thickness data of the reflected light, and then calculates the minimum/maximum ratio. For example, in the normal state, the minimum/maximum ratio of the thickness data is present within the range of 0.95 to 1.05, and in the abnormal state, the minimum/maximum ratio of the thickness data exceeds this range. In addition, the minimum value of the brightness data remains at a value of 220 or more in the normal state and decreases to this value or less in the abnormal state. The image analysis unit 300 analyzes correlation between the two data, determines whether the curvature state of the case corner 82 is normal, and transmits the result to the output unit 400.

Accordingly, the image analysis unit 300 according to an embodiment of the present disclosure can precisely determine the curvature state of the case corner 82 based on the minimum/maximum ratio of the thickness data of the reflected light and the minimum value of the brightness data of the reflected light. Such a determination specification enables reliable analysis of whether the curvature state is abnormal and can greatly increase the accuracy of the inspection process.

In this way, the system for inspecting the curvature of the case corner 82 of the secondary battery according to an embodiment of the present disclosure can precisely and quickly inspect the curvature state of the corner of the secondary battery case 80 in a non-contact manner. In addition, the lighting unit 100, the camera 200, and the image analysis unit 300 cooperate to automatically determine the curvature state, thereby shortening the inspection time and increasing accuracy.

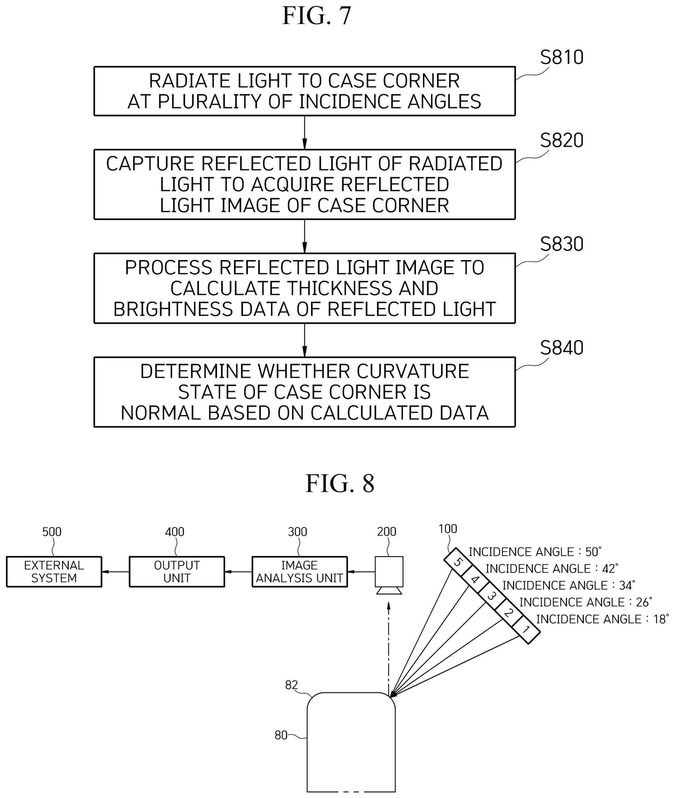

FIG. 7 is a view illustrating a method of inspecting the curvature of a case corner of a secondary battery according to an embodiment of the present disclosure. The detailed specification of some overlapping components in the above embodiment will be omitted in the present embodiment.

A method of inspecting a curvature state of a case corner of a secondary battery according to an embodiment of the present disclosure includes an operation S810 of radiating light to the case corner 82 at a plurality of incidence angles, an operation S820 of capturing reflected light of the radiated light to acquire the reflected light image of the case corner 82, an operation S830 of processing the reflected light image to calculate thickness and brightness data of the reflected light, and an operation S840 of determining whether the curvature state of the case corner 82 is normal based on the calculated data (e.g., based on the calculated thickness data and the calculated brightness data).

This is for a method of inspecting a curvature state of a corner of the secondary battery case 80 and includes radiating light at the plurality of incidence angles, acquiring and processing the reflected light image to calculate the thickness and brightness data, and determining whether the curvature state is normal based on the data. Accordingly, it is possible to analyze the curvature state precisely and reliably and increase inspection accuracy.

The operation S810 of radiating light at the plurality of incidence angles according to an embodiment of the present disclosure includes radiating light at the plurality of incidence angles to the case corner 82 using the lighting unit 100. The lighting unit 100 according to an embodiment of the present disclosure emits light to the case corner 82 of the secondary battery at the plurality of incidence angles to generate reflected light. The lighting unit 100 may set the plurality of incidence angles at regular intervals and control a radiation angle and radiation intensity.

The lighting unit 100 is formed using light sources, such as LEDs, and each light source may be independently controlled to optimize light radiation conditions for each incidence angle. This enables uniform reflected light data to be generated even in the complex structure of the case corner 82.

The lighting unit 100 according to an embodiment of the present disclosure may radiate light to generate reflected light and set a plurality of incidence angles at regular intervals. The lighting unit 100 may use LEDs or similar light sources, and each light source may be operated independently through a controller.

For example, the lighting unit 100 may set incidence angles at regular intervals of 18°, 26°, 34°, 42°, and 50° and radiate light to the case corner 82 so that reflected light with which all corners are uniformly irradiated may be generated. Each incidence angle may be optimized in consideration of the structure of the case corner 82 and the reflection characteristics of light, and such interval settings can minimize distortion of the reflected light to provide accurate curvature data.

The lighting unit 100 according to an embodiment of the present disclosure may sequentially control the set incidence angle to radiate light. This enables the reflection light data generated at each incidence angle to be individually collected so that the curvature state of the case corner 82 can be precisely analyzed.

The set incidence angles are arranged, for example, at regular intervals of 18°, 26°, 34°, 42°, and 50°, and the lighting unit 100 sequentially activates these incidence angles to radiate light. The sequential control may allow the reflected light generated at each incidence angle to be individually processed, which may be integrally analyzed.

The lighting unit 100 may adjust the radiation intensity and radiation time at each incidence angle, and such control allows the lighting unit 100 to ensure uniform radiation of light at each incidence angle and at the same time, generate optimized reflected light data according to the reflection characteristics of the case corner 82.

The operation S820 of capturing the reflected light to acquire the reflected light image according to an embodiment of the present disclosure includes capturing the reflected light of the radiated light using the camera 200, and based on this, acquiring the reflected light image. The camera 200 is vertically disposed above the case corner 82 and is formed to capture the reflected light generated at each incidence angle.

The operation S820 of capturing the reflected light image according to an embodiment of the present disclosure may be performed using the camera 200 vertically disposed above the case corner 82.

The camera 200 may be vertically disposed above the case corner 82 to acquire the reflected light image. This enables the reflected light to be accurately incident on the image sensor of the camera 200, thereby preventing the distortion of the reflected light image and enabling precise data collection. The camera 200 may include a high-resolution image sensor and may be configured to capture a specific change in reflected light. In addition, the camera 200 may individually store the reflected light images captured at each incidence angle, thereby increasing the accuracy of image processing during a subsequent data analysis process.

The operation S830 of processing the reflected light image to calculate the thickness and brightness data according to an embodiment of the present disclosure is performed by the image analysis unit 300, and the acquired reflected light image is processed to calculate the thickness data and brightness data of the reflected light. The thickness data is calculated by calculating the width of the pixel section of which a gray value is 200 or more, and the brightness data is generated by calculating the average value of the valid pixels. Such data quantitatively represents the reflected light information collected at each incidence angle and is used as an important index for evaluating the curvature state.

The thickness data of the reflected light according to an embodiment of the present disclosure may be calculated by calculating the width of the pixel section of which a gray value is 200 or more in the reflected light image.

The image analysis unit 300 analyzes the pixel value of each reflected light image, identifies the start and end points of the valid pixel section, and calculates the width of the section. The thickness data of the reflected light quantitatively represents the uniformity of the curvature state, thereby simultaneously securing the precision and reliability of the inspection process.

The brightness data of the reflected light according to an embodiment of the present disclosure may be calculated by calculating the average value of the pixels of which a gray value is 200 or more in the reflected light image.

The image analysis unit 300 identifies only valid pixels and calculates the brightness data by averaging the brightness values of these pixels. Accordingly, the image analysis unit 300 removes unnecessary noise or data distortion and generates data for accurately evaluating the curvature state.

Since the brightness data remains in the predetermined range in the normal state and varies in the abnormal state, the brightness data is used as an important specification for determining whether the curvature state is abnormal.

The operation S840 of determining whether the curvature state is normal based on the calculated data according to an embodiment of the present disclosure is performed by the image analysis unit 300. The image analysis unit 300 determines whether the curvature state is normal based on the minimum/maximum ratio of the calculated thickness data and the minimum value of the brightness data. In the normal state, the thickness data and the brightness data are present within the predetermined range, and in the abnormal state, the thickness data and the brightness data are outside of the above range. The result of the determination is used to evaluate the quality of the secondary battery case 80 and stored or transmitted to an external system 500 through the output unit 400 (see FIG. 8).

The determination of whether the curvature state is normal according to an embodiment of the present disclosure may include determining whether the curvature state of the case corner 82 is normal based on the minimum/maximum ratio of the thickness data of the reflected light and the minimum value of the brightness data of the reflected light. The ratio of the thickness data represents the uniformity of the curvature state, and the minimum value of the brightness data is used to evaluate the reflection characteristics of the curvature state.

The image analysis unit 300 calculates the minimum and maximum values of the thickness data and represents the calculated minimum and maximum values as a ratio to distinguish the normal state from the abnormal state. In addition, whether the curvature state is abnormal is evaluated based on the minimum value of the brightness data.

The determination of whether the curvature state is normal is performed based on the correlation of the two data, thereby evaluating the curvature state reliably and precisely.

In this way, since the method of inspecting a curvature of the case corner 82 of the secondary batter according to an embodiment of the present disclosure includes radiating light at the plurality of incidence angles and acquiring and processing the reflected light image to calculate the thickness and brightness data, it is possible to precisely inspect the curvature state of the corner of the secondary battery case 80.

FIG. 8 is a view illustrating a system for inspecting the curvature of a case corner of a secondary battery according to an embodiment of still another aspect of the present disclosure. The detailed specification of some overlapping components in the above embodiment will be omitted in the present embodiment.

As illustrated, the system for inspecting the curvature of a case corner of a secondary battery according to an embodiment of the present disclosure includes the lighting unit 100 for radiating light at a plurality of incidence angles to the case corner 82 to generate reflected light, the camera 200 for capturing the generated reflected light to acquire a plurality of reflected light images, the image analysis unit 300 for integrally analyzing the plurality of acquired reflected light images and determining whether the curvature state of the case corner 82 is normal and determining an outlier, and the output unit 400 for visually displaying or storing the determined result.

The present disclosure provides the system for inspecting the curvature state of the case corner of the secondary battery, which includes the lighting unit 100, the camera 200, the image analysis unit 300, and the output unit 400, and determines whether the curvature state is normal and determines an outlier through the reflected light data.

The lighting unit 100 according to an embodiment of the present disclosure radiates light to the case corner 82 at the plurality of incidence angles to generate the reflected light.

The lighting unit 100 may radiate light to generate reflected light, set a plurality of incidence angles at regular intervals, and independently control the radiation intensity and illuminance at each incidence angle.

The radiation intensity is optimized according to the material and curvature of the case corner 82, and illuminance is adjusted to ensure the quality of the reflected light generated at each incidence angle. Accordingly, stable reflected light data can be acquired even under specific environmental conditions.

The lighting unit 100 according to an embodiment of the present disclosure may sequentially control the set incidence angle to radiate light. This enables the reflection light data generated at each incidence angle to be individually collected so that the curvature state of the case corner 82 can be precisely analyzed.

The set incidence angles are arranged, for example, at regular intervals of 18°, 26°, 34°, 42°, and 50°, and the lighting unit 100 sequentially activates these incidence angles to radiate light. The sequential control may allow the reflected light generated at each incidence angle to be individually processed, which may be integrally analyzed (e.g., analyzing all the incidence angles together).

The lighting unit 100 may adjust the radiation intensity and radiation time at each incidence angle, and such control allows the lighting unit 100 to ensure uniform radiation of light at each incidence angle and at the same time, generate optimized reflected light data according to the reflection characteristics of the case corner 82.

The camera 200 according to an embodiment of the present disclosure captures the generated reflected light to acquire the plurality of reflected light images. The camera 200 is vertically disposed above the case corner 82 and is formed to capture the reflected light generated at each incidence angle.

The camera 200 according to an embodiment of the present disclosure may capture the reflected light of the light reflected at the plurality of incidence angles to sequentially acquire time-synchronized reflected light images.

The camera 200 captures the reflected light of the light reflected at the plurality of incidence angles to acquire the time-synchronized reflected light images. Each incidence angle is set at regular intervals of 18°, 26°, 34°, 42°, and 50°, and the camera 200 records the reflected light generated at these incidence angles without distortion. The time synchronization is performed by the camera 200 in conjunction with the lighting unit 100, which allows the image data acquired at each incidence angle to be processed sequentially without mixing.

The camera 200 may include a high-resolution image sensor and may precisely measure pixel values of the reflected light images and also impart time tags to clearly identify the image data captured at each incidence angle, thereby increasing the accuracy and efficiency of data processing.

The camera 200 accurately captures reflected light data at a set incidence angle through time-synchronization with the lighting unit 100. When the lighting unit 100 radiates light at a specific incidence angle, the camera 200 repeats a process of capturing the reflected light generated at the corresponding incidence angle and then moving to the next incidence angle. Such sequential acquisition allows each reflected light image to be individually processed and provides data necessary for analyzing the curvature state.

The camera 200 includes a high-speed image processing device to prevent data distortion or omission during such a process and enables comprehensive analysis of the image data acquired at all incidence angles. This provides data necessary for determining whether the curvature state is normal and determining an outlier.

The image analysis unit 300 according to an embodiment of the present disclosure integrally analyzes the acquired reflected light images and determines whether the curvature state is normal or the outlier is present. The analysis process is performed based on the thickness and brightness data of the reflected light and distinguishes a normal pattern from an abnormal pattern.

The image analysis unit 300 according to an embodiment of the present disclosure may calculate the thickness data and the brightness data from the acquired reflected light image, determine an outlier of the curvature state of the case corner 82 based on the calculated data, and visually display the outlier.

The thickness data is calculated by calculating the width of the pixel section of which a gray value is 200 or more in the reflected light image, and the brightness data is calculated by calculating the average value of the pixels in the same range. These data are used as a major index for analyzing a curvature state.

The image analysis unit 300 determines whether the curvature state is normal and the outlier is present based on the calculated thickness data and brightness data. In the normal curvature, the thickness data and the brightness data are located within the set reference range, and the outlier is determined by identifying data outside of this range. The determination process may be performed by an automated algorithm.

The image analysis unit 300 may also serve to visually display the determined result. The determined result may be displayed in various formats, such as graphs, heat maps, text, etc. so that a user and a system may intuitively understand the determined result.

Accordingly, the image analysis unit 300 according to an embodiment of the present disclosure can precisely analyze the curvature state based on the thickness data and the brightness data and visually display the determined result so that the user may intuitively understand the inspection result.

The image analysis unit 300 according to an embodiment of the present disclosure may use a machine learning algorithm and automatically distinguish a normal curvature pattern from an abnormal curvature pattern in the reflected light image.

The normal curvature pattern is defined as thickness data and brightness data within a specific range based on pre-learned data, and the abnormal curvature pattern is data outside of this range. The machine learning algorithm is designed based on learning data to effectively identify normal and abnormal patterns.

The machine learning algorithm is designed based on supervised learning to learn normal and abnormal curvature patterns. For example, the algorithm receives the thickness data and the brightness data from the reflected light image and automatically analyzes and classifies each pattern.

Accordingly, the image analysis unit 300 according to an embodiment of the present disclosure may automatically distinguish the normal curvature pattern from the abnormal curvature pattern in the reflected light image using the machine learning algorithm, thereby increasing the accuracy of the inspection process.

The output unit 400 according to an embodiment of the present disclosure may visually display or store the determined result and transmit the determined result to the external system 500 as needed.

The output unit 400 may visually display whether the curvature state is normal and any outliers in real time, store the determined inspection result, and transmit the determined result to the external system 500 via a network.

The output unit 400 visually displays whether the curvature state is normal and any outliers, which are determined by the image analysis unit 300, in real time. A visual display method is implemented in various formats, such as graphs, text, heat maps, etc., which intuitively conveys the inspection result to the user.

The output unit 400 also records the inspection result in an internal storage. The stored data will be used for quality control or analysis purposes in the future, and a specific outlier pattern may be repeatedly analyzed to supplement the learning data of the system.

The output unit 400 may transmit the inspection result to the external system 500 via a network. The data transmitted to the external system 500 may be used for remote quality control, data analysis, or a warning system.

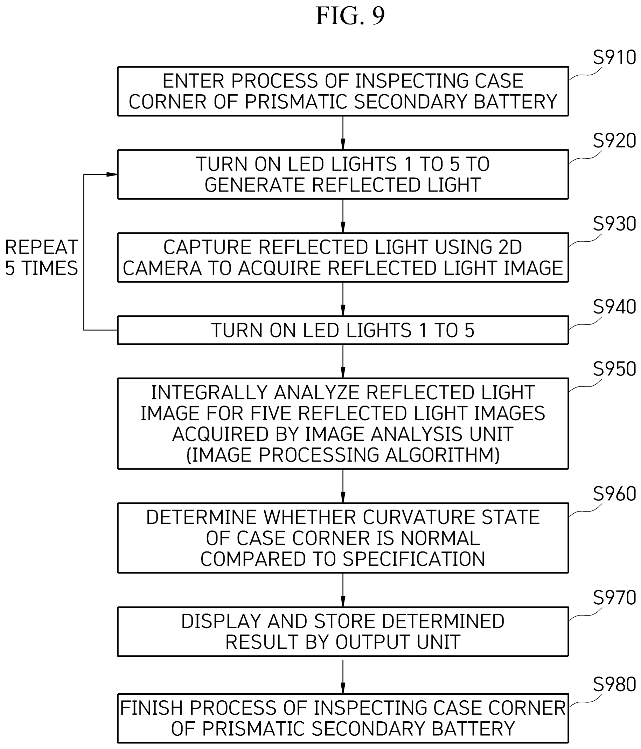

FIG. 9 is a view illustrating a process of inspecting the curvature of a case corner of a prismatic secondary battery according to an embodiment of the present disclosure.

First, in an operation S910 of entering a process of inspecting a case corner of a prismatic secondary battery, an inspection system including a lighting unit, a camera, an image analysis unit, and an output unit provides an inspection target case.

Next, in an operation S920 of turning on LED lights 1 to 5 and generating reflected light, the lighting unit sequentially turns on the LED lights 1 to 5 according to the plurality of set incidence angles. The LED lights radiate light at regular intervals of 18°, 26°, 34°, 42°, and 50°, and the radiated light generates reflected light at the case corner. The LED lights are turned on one by one to generate reflective light through the sequential turn-on process.

In addition, in an operation S930 of capturing the reflected light to acquire reflected light images using a 2D camera, each time each LED light is turned on, the camera captures the reflected light generated by reflecting the radiated light to acquire one reflected light image. A total of five reflected light images are sequentially acquired according to the turned-on LED lights, and each image represents the characteristics of the reflected light at a specific incidence angle.

In addition, in an operation S940 of turning off the LED lights 1 to 5, the LED lights 1 to 5 are repeatedly (e.g., sequentially) turned off in the set order, and the camera acquires a reflected light image whenever turned on. As a result, five reflected light images are collected through synchronization between the LED lights and the camera.

"Repeating 5 times" refers to a process of sequentially turning on each LED light once to acquire a total of 5 reflected light images. That is, the same turn-on-capture operation is performed sequentially for each LED.

In addition, in an operation S950 of integrally analyzing the reflected light image for five reflected light images acquired by the image analysis unit, the image analysis unit analyzes the five acquired reflected light images through an image processing algorithm and calculates thickness data and brightness data of the reflected light. In this process, the width of the pixel section of which a gray value is 200 or more is measured to generate thickness data, and the average brightness of the same pixel is calculated to generate brightness data.

In addition, in an operation S960 of determining whether the curvature state of the case corner is normal compared to specifications, the minimum/maximum ratio of the thickness data of the reflected light and the minimum value of the brightness data of the reflected light are compared with the set specifications. Accordingly, it is determined whether the curvature state of the case corner of the secondary battery is normal or an outlier is present.

In addition, in an operation S970 of displaying and storing the determined result by the output unit, the output unit visually displays the determined result and simultaneously stores the corresponding data or transmits the data to the external system via a network. This result is used to process a defective case in a subsequent process or reflect the defective case in quality management.

In addition, in an operation S980 of finishing the inspection process of the case corner of the prismatic secondary battery, after the inspection process is completed, the case is discharged to the next process. A case that is determined to be normal is moved to a subsequent process, and a case that is determined to be abnormal is discarded or subjected to separate measures.

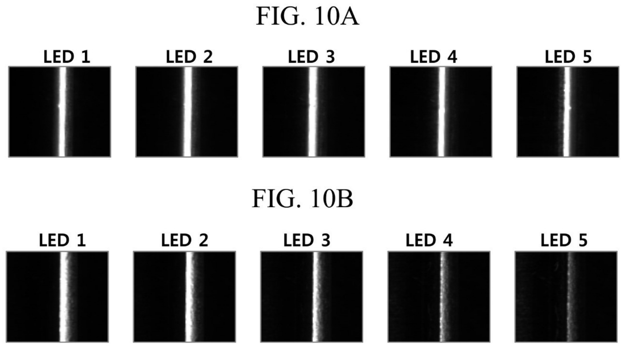

FIGS. 10A and 10B illustrate the result of analyzing the reflected light image by the system for inspecting the curvature of a case corner of a secondary battery according to an embodiment of the present disclosure.

FIG. 10A illustrates the result of capturing, by a camera, the reflected light image of light radiated by the LED lights at a plurality of incidence angles LED1 to LED5 set for a normal sample. The reflected light image visually displays the curvature state of the normal sample and maintains a constant thickness and brightness value at all incidence angles.

FIG. 10B illustrates the result of capturing, by the camera, the reflected light image of light radiated by the LED lights at a plurality of incidence angles LED1 to LED5 set for a defective sample. In the case of the defective sample, the thickness and brightness values of the reflected light images at specific incidence angles LED3 to LED5 show an irregularly decreasing aspect unlike the normal sample. This visually shows that an outlier is present in the curvature state of the defective sample.

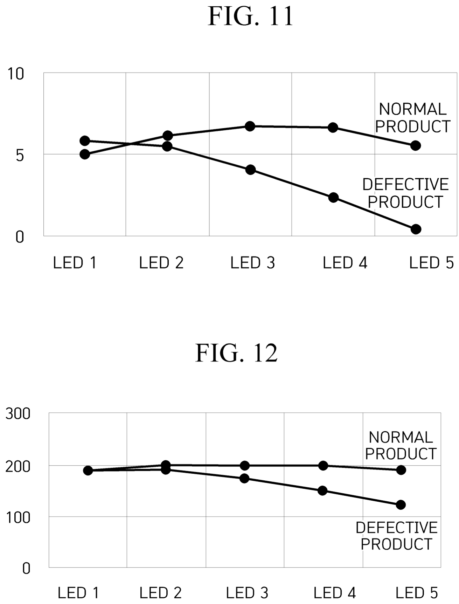

FIG. 11 is a comparison graph of thicknesses of reflected light of a normal sample and a defective sample using the system for inspecting the curvature of a case corner of a secondary battery according to an embodiment of the present disclosure.

The thickness of the reflected light of the normal sample maintains a gentle curve within a predetermined range in the order from LED1 to LED5. This shows that the curvature state of the normal sample is uniform and the thickness of the reflected light is stably measured at each incidence angle. Since the thickness of the reflected light of the normal sample maintains a high value at all incidence angles, the normal curvature state can be visually identified.

The thickness of the reflected light of the defective sample shows a rapidly decreasing pattern in the order from LED1 to LED5. In particular, since the thickness value is significantly low after LED 3, a difference from the normal sample is noticeable. This shows that an outlier is present in the curvature state of the defective sample and the thickness of the reflected light greatly varies at a specific incidence angle.

FIG. 12 is a comparison graph of brightness of reflected light of a normal sample and a defective sample using the system for inspecting a curvature of a case corner of a secondary battery according to an embodiment of the present disclosure.

The brightness of the reflected light of the normal sample seems to maintain a predetermined value from LED1 to LED5. This shows that the curvature state of the normal sample is uniform and the brightness of the reflected light is stably maintained at each incidence angle. Since the brightness of the reflected light of the normal sample maintains a high value at all incidence angles, the normal curvature state can be visually identified.

The brightness of the reflected light of the defective sample shows a rapidly decreasing pattern in the order from LED1 to LED5. In particular, since the brightness value is significantly low after LED 3, a difference from the normal sample is noticeable. This shows that an outlier is present in the curvature state of the defective sample and the brightness of the reflected light greatly varies at a specific incidence angle.

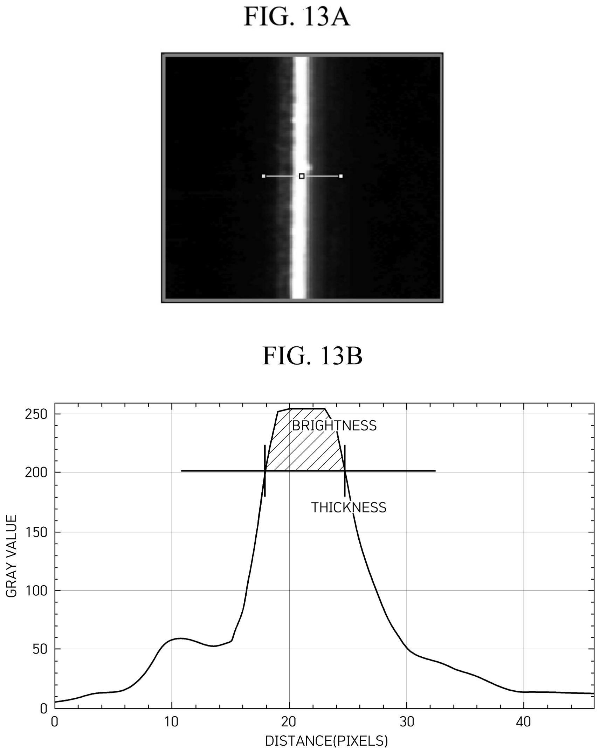

FIG. 13A is a view illustrating a reflected light image for a normal sample using the system for inspecting the curvature of a case corner of a secondary battery according to an embodiment of the present disclosure. In the case of a normal sample, since the reflected light image has a clear central portion and evenly distributed brightness, the normal curvature state can be visually identified.

FIG. 13B is a view illustrating profile data generated based on the reflected light image of FIG. 13A. The image analysis unit calculates thickness and brightness data based on the gray value in the reflected light image. In the profile data, an X-axis represents a location of reflected light (on the basis of a pixel), and a Y-axis represents a brightness value. In the case of a normal sample, the brightness value reaches a maximum (about 250) in the central portion of the reflected light, the brightness distribution is symmetrical, and the thickness is constant.

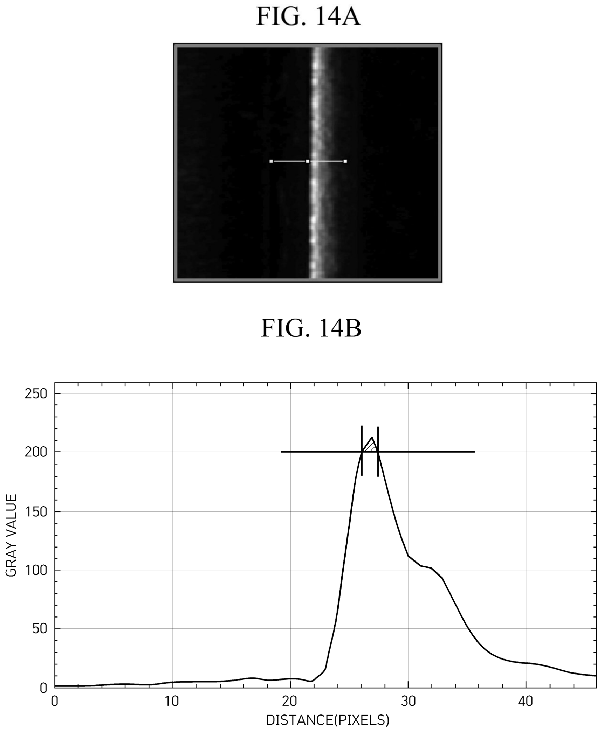

FIG. 14A is a view illustrating a reflected light image for a defective sample using the system for inspecting the curvature of a case corner of a secondary battery according to an embodiment of the present disclosure. In the case of a defective sample, the center of brightness in the reflected light image moves irregularly or the thickness varies abnormally.

FIG. 14B is a view illustrating profile data generated based on the reflected light image of FIG. 14A. The image analysis unit calculates thickness and brightness data based on the gray value in the reflected light image. In the profile data, an X-axis represents a location of reflected light (on the basis of a pixel), and a Y-axis represents a brightness value. In the case of a defective sample, the center of the reflected light varies asymmetrically, and the brightness value is lower than that of the normal state or is distributed irregularly. In particular, the maximum brightness and thickness non-uniformity of the profile are used as indexes that represent a defective state.

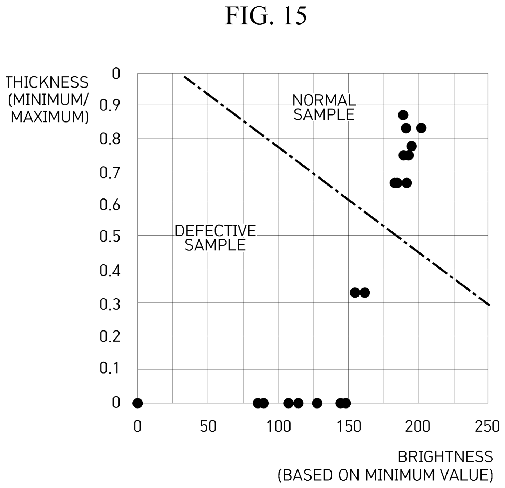

FIG. 15 is a view illustrating a data analysis result that distinguishes a normal sample from a defective sample based on thickness and brightness data of reflected light using the system for inspecting the curvature of a case corner of a secondary battery according to an embodiment of the present disclosure.

An X-axis of FIG. 15 represents a minimum value of brightness data, and a Y-axis represents a minimum/maximum ratio of thickness data. The dotted line represents a reference line that distinguishes a normal sample from a defective sample, data located above this reference line is determined to be a normal sample, and data located below this reference line is determined to be a defective sample.

The brightness and thickness data of the normal sample are stably maintained, exceed the reference line, and are concentrated at the top of the drawing. On the other hand, the defective samples are distributed below the baseline due to low brightness or an abnormally small or large thickness. This allows the asymmetry and decrease in brightness of the reflected light, which occurs at a curvature of a corner of a defective sample.

As illustrated, it can be confirmed that the normal sample and the defective sample can be effectively distinguished using the thickness data and brightness data of the reflected light. Accordingly, it is possible to quickly and accurately determine whether the sample is abnormal during the process, reduce the defective rate, and improve productivity.

Conventional methods of inspecting the curvature of a case corner of a prismatic secondary battery are generally based on physical or visual inspection and are performed through a complex 3D scanning technology or manual inspection.

The 3D scanning technology can provide high accuracy, but it is difficult to apply the 3D scanning technology to large-scale production lines due to the long inspection time and expensive equipment. In addition, since the manual inspection depends on the skills of skilled workers, there is a possibility of inconsistent inspection results and lowered productivity.

The present disclosure is directed to providing a system and method for inspecting the curvature of a case corner of a secondary battery, which is for quickly and accurately inspecting a curvature state of the case corner of the secondary battery.

According to embodiments of the present disclosure, it is possible to improve inspection efficiency and reliability by providing a system and method for inspecting a curvature state of a case corner of a secondary battery quickly and more accurately.

In addition, the method according to an embodiment of the present disclosure may be implemented in the form of program commands that may be performed through various computer devices and recorded on a computer-readable medium.

The computer-readable medium may include program commands, data files, data structures, and the like alone or in combination. The program commands recorded on the computer-readable recording medium may be specially designed and configured for an embodiments of the present disclosure or may be known and available to those skilled in the field of computer software. The computer-readable recording medium may include a hardware device configured to store and perform the program commands. For example, the computer-readable recording medium may include magnetic media such as a hard disk, a floppy disk, and a magnetic tape, optical media such as a compact disc read only memory (CD-ROM) and a digital video disk (DVD), and magneto-optical media such as a floptical disk, a read only memory (ROM), a random access memory (RAM), and a flash memory. The program commands include not only machine language code such as that produced by a compiler but also high-level language code that may be executed by a computer using an interpreter or the like.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A system for inspecting curvature of a case corner (82) of a secondary battery, the system comprising:
a light source (100) configured to radiate light to a case corner (82) of a secondary battery at a plurality of incidence angles to generate reflected light, resulting in generated reflected light;
a camera (200) configured to capture the generated reflected light to acquire a reflected light image of the case corner (82); and
an image analyzer (300) configured to analyze the reflected light image and determine whether a curvature state of the case corner (82) is normal.

2. The system as claimed in claim 1, wherein the light source (100) is configured to set the plurality of incidence angles at regular intervals and sequentially control the set incidence angles.

3. The system as claimed in claim 1 or 2, wherein the camera (200) is above the case corner (82) to acquire the reflected light image.

4. The system as claimed in any of claims 1 to 3, wherein the image analyzer (300) is configured to determine whether the curvature state of the case corner (82) is normal based on a minimum/maximum ratio of thickness data of the generated reflected light and a minimum value of brightness data of the generated reflected light.

5. A method of inspecting curvature of a case corner (82) of a secondary battery, the method comprising:
radiating light to a case corner (82) of a secondary battery at a plurality of incidence angles;
capturing reflected light of the radiated light to acquire a reflected light image of the case corner (82);
processing the reflected light image to calculate thickness data and brightness data of the reflected light, resulting in calculated thickness data and calculated brightness data; and
determining whether a curvature state of the case corner (82) is normal based on the calculated thickness data and the calculated brightness data.

6. The method as claimed in claim 5, wherein radiating light comprises setting, by a light source (100), incidence angles at regular intervals, resulting in set incidence angles; and sequentially controlling, by the light source (100), the set incidence angles and radiates light at each of the set incidence angles.

7. The method as claimed in claim 5 or 6, wherein capturing the reflected light image includes using a camera (200) above the case corner (82).

8. The method as claimed in any one of claims 5 to 7, wherein determining whether the curvature state of the case corner (82) is normal comprises determining whether the curvature state of the case corner (82) is normal based on a minimum/maximum ratio of the calculated thickness data and a minimum value of the calculated brightness data.

9. A system for inspecting curvature of a case corner (82) of a secondary battery, the system comprising:
a light source (100) configured to radiate light to a case corner (82) of a secondary battery at a plurality of incidence angles to generate reflected light, resulting in generated reflected light;
a camera (200) configured to capture the generated reflected light to acquire a plurality of reflected light images, resulting in a plurality of acquired reflected light images;
an image analyzer (300) configured to integrally analyze the plurality of acquired reflected light images, determine whether a curvature state of the case corner (82) is normal, resulting in a determined curvature state of the case corner (82) and determine an outlier; and
an output unit (400) configured to visually display or store the determined curvature state of the case corner (82).

10. The system as claimed in claim 9, wherein the light source (100) is configured to:
set the plurality of incidence angles at regular intervals to radiate light, and
independently control a radiation intensity and an illuminance at each of the plurality of incidence angles.

11. The system as claimed in claim 9 or 10, wherein the camera (100) is configured to capture the generated reflected light at each of the plurality of incidence angles to sequentially acquire time-synchronized reflected light images, resulting in acquired reflected light images.

12. The system as claimed in any one of claims 9 to 11, wherein the image analyzer (300) is configured to:
calculate thickness data and brightness data from the acquired reflected light images, resulting in calculated thickness data and calculated brightness data,
determine an outlier of the determined curvature state of the case corner (82) based on the calculated thickness data and calculated brightness data, and
visually display the outlier.

13. The system as claimed in any one of claims 9 to 12, wherein the image analyzer (300) is configured to use a machine learning algorithm and automatically distinguish a normal curvature pattern from an abnormal curvature pattern in the plurality of acquired reflected light images.

14. The system as claimed in any one of claims 9 to 13, wherein the output unit (400) is configured to:
visually display whether the curvature state is normal and the outlier in real time,
store the determined curvature state of the case corner (82), and
transmit the determined curvature state of the case corner (82) to an external system via a network.
